# EUROPÄISCHE PATENTANMELDUNG

(11) **EP 2 484 924 A1**
(43) Veröffentlichungstag der Anmeldung: **08.08.2012**
(21) Anmeldenummer: 12000778.6
(22) Anmeldetag: 07.02.2012
(51) Int. Cl.: F16B 37/06, F16B 37/04

(54) **Fügeverbindung sowie Verfahren zur Ausbildung einer Fügeverbindung**

(30) Priorität: 28.06.2011 DE 202011102925 U; 08.02.2011 DE 202011002512 U
(71) Anmelder: Richard Bergner Verbindungstechnik GmbH & Co. KG, 91124 Schwabach (DE)
(72) Erfinder: Dehlke, Klaus Dr.-Ing., 91575 Windsbach (DE)
(74) Vertreter: FDST Patentanwälte

(57) **Zusammenfassung**

Zur Ausbildung einer auszugssicheren Fügeverbindung zwischen einem Befestigungselement (2), insbesondere Einpressmutter, mit einem ersten Bauteil (12), insbesondere aus einem Faserverbundwerkstoff, ist vorgesehen, dass das erste Bauteil (12) zwischen dem Befestigungselement (2) und einer Gegenlagerscheibe (14) eingeklemmt ist, und das Befestigungselement (2) das Einpresselement einen über das Bauteil (12) überstehenden Befestigungsbereich (10) eines Hohlschafts (8) aufweist, der mit der Gegenlagerscheibe (8) kraft- oder formsclüssig verbunden ist. Hierdurch lassen sich bei extrem dünnwandigen Blechbauteilen auszugssichere Verbindungen ausbilden, zudem wird das Bauteil (12) beim Setzvorgang nicht belastete, so dass bei Faserverbundbauteilen die Gefahr einer Delamination gebannt ist.

## Beschreibung

Die Erfindung betrifft eine Fügeverbindung mit den Merkmalen des Oberbegriffs des Patentanspruchs 1 sowie ein Verfahren zur Ausbildung einer solchen Fügeverbindung.

Die Fügeverbindung ist demnach zwischen einem vorgelochten ersten Bauteil und einem Befestigungselement ausgebildet, das zur Befestigung eines zweiten Bauteils dient ist. Das Befestigungselement ist dabei insbesondere als eine Mutter mit einem Innengewinde ausgebildet. Derartige Befestigungselemente sind insbesondere als sogenannte Einpresselemente, speziell als Einpressmuttern bekannt. Derartige Befestigungselemente weisen üblicherweise einen Kopf auf, in dem im Falle einer Mutter das Innengewinde ausgebildet ist. In axialer Richtung schließt sich an den Kopf ein Schaft an, der üblicherweise als ein Hohlschaft ausgebildet ist. Mit dem Hohlschaft wird das Befestigungselement in ein jeweiliges Führungsloch des vorgelochten Bauteils eingesetzt. Zur Ausbildung der Fügeverbindung wird bei Einpresselementen der Hohlschaft verformt, sodass er mit dem ersten Bauteil einen Formschluss ausbildet. Ein derartiger Verbund wird auch als Nietverbund bezeichnet.

Eine derartige Fügeverbindung ist beispielsweise aus der DE 103 43 930 B4 zu entnehmen. Hierin ist eine Einpressmutter für dicke Blechbauteile beschrieben. Zur Ausbildung der Fügeverbindung mit einem Blechbauteil ist vorgesehen, dass ein sich an der Unterseite des Einpresselements anschließender insbesondere ringförmiger Kragen endseitig einen Verformungsbereich hat, welcher beim Einpressvorgang verformt und in den Wandungsbereich des Führungsloches des Blechbauteils eingepresst wird.

Derartige Fügeverbindungen werden in vielen Bereichen und insbesondere auch in der Automobilindustrie eingesetzt. Bei der Montage werden Einpresselemente wie Einpressbolzen (Schrauben) oder Einpressmuttern in insbesondere vorgelochte und vorgestanzte Karrosseriebauteile eingepresst, um eine Befestigungsmöglichkeit für ein weiteres Bauteil zu schaffen, welches üblicherweise durch eine Schraubverbindung befestigt wird.

Insbesondere im Kraftfahrzeugbereich müssen viele Fügeverbindungen eine ausreichende Festigkeit und insbesondere Auszugsfestigkeit aufweisen, um den vorgeschriebenen Anforderungen im Hinblick auf eine ausreichende Crashsicherheit zu genügen.

Zunehmend kommen beispielsweise im Rahmen des Leichtbaus Faserverbundwerkstoffe zum Einsatz. Diese bestehen oftmals aus einem Laminataufbau. Derartige Werkstoffe sind üblicherweise mechanisch sehr empfindlich und für Einpresselemente nur bedingt geeignet, da beispielsweise bei der erforderlichen Lochoperation der Faserverbund beschädigt werden kann (Delamination).

Ausgehend hiervon liegt der Erfindung die Aufgabe zugrunde, eine verbesserte Fügeverbindung sowie ein verbessertes Verfahren zur Ausbildung einer solchen Fügeverbindung anzugeben.

Die Aufgabe wird erfindungsgemäß gelöst mit den Merkmalen des Anspruchs 1. Danach ist vorgesehen, dass das Befestigungselement, welches insbesondere als eine Mutter, vorzugsweise eine Einpressmutter ausgebildet ist, mit einer Druck- oder Gegenlagerscheibe zusammenwirkt, derart, dass das Bauteil zwischen dem Befestigungselement und der Gegenlagerscheibe eingeklemmt wird. Hierzu weist das Befestigungselement einen vorzugsweise als Hohlschaft ausgebildeten Schaft auf, der endseitig einen über das Bauteil überstehenden Befestigungsbereich aufweist. Der Hohlschaft ist in ein Befestigungsloch der als Lochscheibe ausgebildeten Gegenlagerscheibe eingeführt und mit dieser kraft- und/oder formschlüssig verbunden ist. Das Bauteil ist vorzugsweise ein sehr dünnwandiges Blechbauteil und weiter bevorzugt ein Bauteil aus einem Verbundwerkstoff, insbesondere ein Faserverbundwerkstoff, wie beispielsweise ein sogenanntes CFK-Bauteil. Der Befestigungsbereich ist dabei der über das erste Bauteil überstehende Bereich des Hohlschafts.

Von besonderer Bedeutung hierbei ist, dass zur Ausbildung der Fügeverbindung das Funktionselement mit dem Bauteil selbst keine direkte kraft- oder formschlüssige Verbindung eingeht. Das Befestigungselement übt daher keine unmittelbare Kraft auf das Bauteil aus, wie dies bei herkömmlichen Fügeverbindungen mit Einpressmuttern der Fall ist. Insbesondere wird bei dem Setzvorgang, also bei der Befestigung des Befestigungselements mit der Gegenlagerscheibe am Bauteil, auf die Lochwand des Führungslochs keinerlei Kraft ausgeübt. Insgesamt ist insbesondere bei der Verwendung von Verbundwerkstoffen dadurch auf der einen Seite eine sehr sichere Fügeverbindung mit hoher Auszugsfestigkeit erreicht, wobei gleichzeitig eine Beschädigung (Delamination) des nach Art eines Laminats aufgebauten Verbundwerkstoffes ausgeschlossen ist.

Bei der Fügeverbindung liegt der Hohlschaft vorzugsweise an der Wandung des Führungsloches bis auf ein erforderliches Toleranz- und Einführspiel an. Weiterhin ist von besonderer Bedeutung, dass das Führungsloch mit dem Befestigungsloch der Gegenlagerscheibe fluchtet, sodass also keine Kerbwirkungen aufgrund von Übergangskanten entstehen.

Zur Ausbildung der kraft- oder formschlüssigen Verbindung zwischen der Gegenlagerscheibe und dem Befestigungsbereich sind in bevorzugten Alternativen verschiedene Varianten vorgesehen. Gemäß einer ersten bevorzugten Ausführungsvariante ist der Befestigungsbereich als ein Verformungsbereich ausgebildet, der radial nach außen umgebogen ist und dadurch einen Formschluss mit der Gegenlagerscheibe ausbildet. Es ist somit ein in axialer Richtung wirkender Hintergriff zwischen Befestigungsbereich und Gegenlagerscheibe ausgebildet. Der restliche Bereich des hohlschafts bleibt unverformt.

Gemäß einer bevorzugten Weiterbildung ist hierbei vorgesehen, dass der Befestigungsbereich in eine Lochwand des Befestigungslochs eingepresst ist, ohne über die Gegenlagerscheibe überzustehen. Das Befestigungselement ist hierzu insbesondere wie das aus der DE 10 343 930 B4 zu entnehmende Einpresselement ausgebildet. Die Verbindung zwischen dem Befestigungselement und der Gegenlagerscheibe entspricht daher insoweit der darin beschriebenen Verbindung zwischen dem Einpresselement und dem Bauteil. Zur Ausbildung dieser Einpressverbindung ist demnach auch vorgesehen, dass beim Setzvorgang mit Hilfe eines Stempels der Befestigungsbereich umgebogen wird und in die Wandung der Gegenlagerscheibe eingepresst wird. Insoweit wird auf die DE 10 343 930 B4 verwiesen, deren Offenbarungsgehalt hiermit vollumfänglich mit aufgenommen wird. Der entsprechend umgeformte und in die Lochwand eingepresste Befestigungsbereich ist insgesamt ringförmig ausgebildet.

Gemäß einer vorteilhaften zweiten Alternative ist der Befestigungsbereich mit der Gegenlagerscheibe verpresst, ohne einen Formschluss auszubilden, in diesem Fall wird daher der Befestigungsbereich nicht radial zur Ausbildung eines Hintergriffs aufgeweitet. Zwischen Gegenlagerscheibe und Befestigungsbereich ist eine Presspassung ausgebildet.

Sowohl bei der ersten als auch der zweiten Variante handelt es sich daher um Pressverbindungen eines Einpresselements (Befestigungselement) mit der Gegenlagerscheibe, da beim Setzvorgang ein Pressvorgang erfolgt.

Gemäß einer dritten vorteilhaften Alternative ist schließlich eine Verschraubung zwischen der Gegenlagerscheibe und dem Befestigungselement vorgesehen. Hierzu weist die Gegenlagerscheibe ein Innengewinde und das Befestigungselement am Hohlschaft ein Außengewinde auf.

Bei allen drei Varianten steht der Befestigungsbereich vorzugsweise nicht über die Gegenlagerscheibe über, der Befestigungsbereich wird also nicht durch die Gegenlagerscheibe hindurchgeführt sondern lediglich in das Befestigungsloch eingeführt. Damit kann die Gegenlagerscheibe eine Auflagefläche für das zu befestigendende zweite Bauteil bilden.

In vorteilhafter Weiterbildung ist ergänzend zu der form- oder kraftschlüssige Verbindung weiterhin eine Klebeverbindung zwischen dem Befestigungselement und/oder der Gegenlagerscheibe und dem ersten Bauteil vorgesehen. Vorzugsweise ist sowohl das Befestigungselement als auch die Gegenlagerscheibe mit dem ersten Bauteil verklebt. Allgemein liegt das Befestigungselement mit einer planen, ringförmigen Auflagefläche auf einer Oberseite des ersten Bauteils auf. Diese Auflagefläche ist beispielsweise zugleich eine Klebefläche, in der ein geeigneter Kleber angeordnet ist. Weiterhin ist zweckdienlicherweise auch vorgesehen, dass der Hohlschaft zumindest bereichsweise im Führungsloch des Bauteils eingeklebt ist. Weiterhin ist die Gegenlagerscheibe mit ihrer insbesondere ebenfalls ringförmigen Auflagefläche auf der Unterseite des Bauteils mittels Klebstoff verklebt.

Eine derartige ergänzende Klebeverbindung erhöht die Verbindungsqualität, führt insbesondere zu verbesserten Steifigkeiten und Auszugsfestigkeiten. Insbesondere ist eine derartige unterstützende Verbindung bei Scherbeanspruchungen von besonderem Vorteil. Dies zeigte sich insbesondere bei Faserverbundwerkstoffen, die empfindlich gegenüber Scherbeanspruchungen sind.

Bei der Ausbildung als Mutter ist im Inneren des Kopfes das bereits erwähnte Innengewinde vorgesehen. In zweckdienlicher Weiterbildung ist dieses im Hohlschaft und zwar vorzugsweise über dessen gesamte axiale Länge fortgeführt. Dieses Innengewinde dient zum Einschrauben einer Befestigungsschraube, mit deren Hilfe das zweite Bauteil am ersten Bauteil befestigt wird. Durch die Fortführung des Innengewindes auch im Hohlschaft kann die Kopfhöhe des Kopfes verringert werden.

Bei der Schraubverbindung zwischen Gegenlagerscheibe und Befestigungselement ist in zweckdienlicher Ausgestaltung vorgesehen, dass der Hohlschaft ausschließlich im Befestigungsbereich ein Außengewinde aufweist. Demgegenüber ist der Hohlschaft in einem Zwischenbereich zwischen dem Kopf und dem Befestigungsbereich glatt ausgebildet, sodass keine Beschädigung der Lochwandung des Führungslochs beim Setzvorgang erfolgt.

Entsprechend ist auch in vorteilhafter Weise vorgesehen, dass das Außengewinde in radialer Richtung nicht über den Zwischenbereich übersteht, um eben eine Beschädigung der Lochwandung und damit eine Delamination zuverlässig zu verhindern.

Unter Gegenlagerscheibe wird allgemein eine insbesondere kreisringförmige Lochscheibe verstanden. Diese weist vorzugsweise einen gleichen Außendurchmesser wie das Befestigungselement auf. Gleichzeitig fluchtet der Lochrand des Befestigungsloches mit dem entsprechenden Lochrand des Führungsloches im Bauteil, sodass insgesamt die ringförmigen Auflageflächen des Befestigungselements einerseits und der Gegenlagerscheibe andererseits zumindest weitgehend gleich und vorzugsweise identisch sind. Dadurch wird auch bei empfindlichen Bauteilen eine homogene Flächenpressung gewährleistet, ohne dass Druckkanten oder dergleichen entstehen, die zu einer Delamination führen könnten.

Weiterhin ist vorzugsweise bei allen drei Ausführungsvarianten die Gegenlagerscheibe kreisringförmig ausgebildet, ebenso wie der Kopf des Befestigungselements.

Im Hinblick auf die geometrischen Abmessungen weist die Gegenlagerscheibe vorzugsweise eine Dicke im Bereich von lediglich einigen Millimetern, insbesondere im Bereich von 1,5mm bis 5mm auf. Demgegenüber ist der Außendurchmesser der Gegenlagerscheibe um ein Vielfaches größer, insbesondere um mehr als das fünffache und vorzugsweise mehr als das zehnfache. Es handelt sich hierbei also um eine dünne flach ausgebildete Lochscheibe mit einer möglichst großen ringförmigen Auflagefläche. Entsprechend ist in zweckdienlicher Ausgestaltung auch vorgesehen, dass der Außendurchmesser der Gegenlagerscheibe ein Vielfaches des Lochdurchmessers des Befestigungsloches beträgt. Insbesondere ist der Außendurchmesser zumindest größer als das vorzugsweise 2-fache des Lochdurchmessers.

Mit dieser Fügeverbindung lassen sich daher auszugssichere Verbindungen erzielen, selbst bei extrem dünnwandigen Bauteilen oder bei empfindlichen Verbundbauteilen. Im Falle von dünnen Blechbauteilen, bei denen das Blechbauteil eine Dicke < 1 mm aufweist, weist die Gegenlagerscheibe üblicherweise eine Dicke im Bereich der Bauteildicke oder noch etwas darüber auf.

Das erste Bauteil zusammen mit dem darin eingebrachten Befestigungselement (Einpressmutter) bildet insgesamt vorzugsweise eine vorgefertigte Montagebaueinheit. Üblicherweise sind dabei im ersten Bauteil an definierten, vorgegebenen Positionen eine Vielzahl von derartigen Befestigungselementen wie zuvor beschrieben eingebracht. Eine derartige, vorgefertigte Montagebaueinheit ist zweckdienlicherweise ein vorgefertigtes Karosseriebauteil insbesondere eines Kraftfahrzeugs. Dieses vorgefertigte Bauteil wird als solches an die Produktions- oder Montagestraße gebracht, insbesondere nachdem es in einer anderen Produktionswerkstätte, beispielsweise des Zuliefereres, vorbereitet wurde. Anschließend wird das das zweite Bauteil an dieser Montagebaueinheit angeschraubt.

Zweckdienlicherweise ist dabei vorgesehen, dass die Gegenlagerscheibe zugleich einen Abstandshalter zwischen den beiden Bauteilen ausbildet und diese auf definiertem Abstand hält. Somit erfüllt die Gegenlagerscheibe eine Doppelfunktion, nämlich zum Einen eine Verstärkung bei einem nur dünnen Blechbauteil und zugleich die Abstandsfunktion zum zweiten Bauteil hin.

Die Aufgabe wird erfindungsgemäß weiterhin gelöst durch ein Verfahren mit den Merkmalen des Anspruchs 15. Zum Ausbilden der Fügeverbindung ist hierbei jeweils ein Setzvorgang erforderlich, bei dem allgemein mit Hilfe eines Stempels das Befestigungselement von der Bauteiloberseite her in das Führungsloch eingeführt wird und mit Hilfe eines an der Bauteilunterseite angeordneten Gegenstücks, wie beispielsweise eine entsprechende Matrize, mit der Gegenlagerscheibe verbunden wird. Bei der dritten Ausführungsvariante mit der Schraubverbindung ist der Stempel in der Lage, eine Drehbewegung auszuüben und die gegenüberliegende Matrize ist zum Greifen der Gegenlagerscheibe ausgebildet um ein Verdrehen beim Einschrauben zu vermeiden.

Insbesondere in den beiden erstgenannten Ausführungsvarianten der Pressverbindungen wird die Gegenlagerscheibe mit Hilfe des Gegenstücks gegen die Bauteilunterseite des ersten Bauteils gepresst.

Der besondere Vorteil der hier beschriebenen Fügeverbindung ist darin zu sehen, dass diese durch die Anordnung der Gegenlagerscheibe insbesondere bei dünnwandigen Blechbauteilen mit einer Blechstärke beispielsweise < 1 mm die Auszugsfestigkeit in Axialrichtung verbessert. Bei Verwendung von Verbundbauteilen wird überhaupt erst eine zuverlässige Fügeverbindung ermöglicht. Insbesondere für den Automobilbereich wird dadurch eine erhöhte Crashsicherheit erzielt. Für eine hohe Auszugssicherheit wird grundsätzlich eine große Auflagefläche sowohl des Einpresselements als auch der Gegenlagerscheibe eingestellt. Vorzugsweise ist die Auflagefläche der Gegenlagerscheibe gleich groß oder größer als die des Einpresselements.

Zudem wird durch diese Fügeverbindung bei empfindlichen Bauteilen und Werkstoffen eine sichere und bauteilschonende Ausbildung der Verbindung gewährleistet. Durch die spezielle Fügeverbindung wird nämlich bei dem Setzen der Elemente (Befestigungselement / Gegenlagerscheibe) keine Kraft auf das vorgelochte Bauteil ausgebübt. Die Krafteinwirkung erfolgt nur zur Verbindung zwischen Befestigungselement (Mutter) und Gegenlagerscheibe.

Ausführungsbeispiele der Erfindung werden im Folgenden anhand der Figuren näher erläutert. Diese zeigen jeweils in vereinfachten Darstellungen:
- FIG 1: in einer Art Schnittdarstellung eine erfindungsgemäße Fügeverbindung gemäß einer ersten Ausführungsvariante zusammen mit einem zweiten Bauteil,
- FIG 2: in einer perspektivischen Schnittdarstellung eine Fügeverbindung gemäß einer zweiten Ausführungsvariante, bei der zwischen einem Hohlschaft des Befestigungselements und der Gegenlagerscheibe ein Pressverbund ausgebildet ist,
- FIG 3: eine perspektivische Schnittdarstellung der Fügeverbindung ähnlich der ersten Ausführungsvariante gemäß FIG 2, bei der zwischen dem Hohlschaft und der Gegenlagerscheibe ein Nietverbund ausgebildet ist,
- FIG 4: eine Fügeverbindung in perspektivischer Schnittdarstellung ähnlich FIG 2 mit verlängertem Innengewinde,
- FIG 5: eine perspektivische Schnittdarstellung einer Fügeverbindung, bei der zwischen dem Hohlschaft und der Gegenlagerscheibe ein Schraubverbund ausgebildet ist.

In den Figuren sind gleichwirkende Teile mit den gleichen Bezugszeichen versehen.

Im allen Ausführungsbeispielen ist als Befestigungselement eine Mutter 2 vorgesehen, die teilweise als Einpressmutter ausgebildet ist. Die Mutter 2 weist einen Kopf 4 mit einem Innengewinde 6 auf. An der Unterseite des Kopfes 4 ist ein zylindrischer Hohlschaft 8 mit kreisringförmigem Querschnitt ausgebildet, welcher endseitig einen Befestigungsbereich 10 aufweist.

Die Mutter 2 weist einen Außendurchmesser D auf und sitzt mit ihrer planen Kopfunterseite flächig auf einer Oberseite eines vorgelochten ersten Bauteils 12 auf. An der Unterseite des ersten Bauteils 12 ist eine auch als Druckscheibe bezeichnete Gegenlagerscheibe 14 angeordnet. Diese weist den gleichen Außendurchmesser D wie die Mutter 2 auf.

Die Gegenlagerscheibe 14 ist als eine kreisringförmige Lochscheibe ausgebildet. Sie weist ein Befestigungsloch 16 auf, welches einen Innendurchmesser d hat, der insbesondere dem Innendurchmesser d eines Führungsloches 18 des ersten Bauteils 12 entspricht. Das Befestigungsloch 16 fluchtet daher mit dem Führungsloch 18. Um eine möglichst große Auflagefläche im Hinblick auf eine möglichst große Auszugssicherheit zu erreichen ist der Außendurchmesser D deutlich größer als d, vorzugsweise ist D > 1,5 * d, und insbesondere ist D > 2 * d. Das erste Bauteil 12 ist zwischen der Mutter 2 und der Gegenlagerscheibe 14 sicher und zuverlässig eingeklemmt. Die derartig ausgebildete Fügeverbindung dient zum Befestigen eines zweiten Bauteils 20. Dieses wird an der Bauteilunterseite des ersten Bauteils 12 befestigt, im Ausführungsbeispiel mit Hilfe einer hier nicht näher dargestellten Schraube. Diese wird von der Seite des zweiten Bauteils 20 durch das zweite Bauteil 20 hindurch gesteckt und in das Gewinde 6 eingeschraubt. Das zweite Bauteil 20 ist vorzugsweise ebenfalls vorgelocht. Die beiden Bauteile 12,20 sind im Ausführungsbeispiel parallel zueinander ausgerichtet.

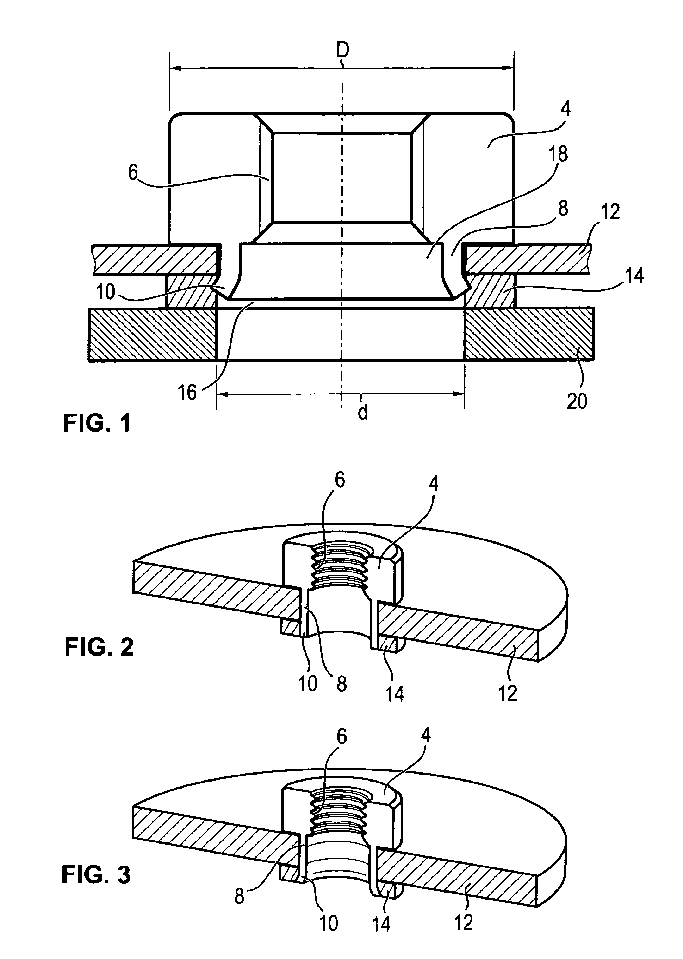

Wie aus der FIG 1 zu entnehmen ist, definiert bei dieser Ausführungsvariante die Gegenlagerscheibe 14 zugleich einen Abstandshalter, sodass die beiden Bauteile 12, 20 in definiertem Abstand zueinander gehalten sind. Der Abstand zwischen den beiden Bauteilen 12, 20 ist daher durch die Dicke der Gegenlagerscheibe 14 definiert, die beispielsweise im Bereich zwischen 1 mm und 5mm und vorzugsweise bei 2mm liegt.

Bei allen Ausführungsbeispielen der Fügeverbindung liegt der Hohlschaft 8 vorzugsweise möglichst passgenau im Führungsloch 18 ein, sodass - bis auf ein erforderliches Einführspiel kein radiales Spiel vorliegt.

Weiterhin ist bei allen Ausführungsvarianten vorzugsweise vorgesehen, dass zusätzlich zu der form- und/oder kraftschlüssigen Verbindung eine Klebeverbindung mit dem ersten Bauteil 12 vorgesehen ist. Vorzugsweise ist hierzu an insbesondere sämtlichen Kontaktflächen zwischen dem Befestigungselement 2 und dem ersten Bauteil 12 sowie auch an der Auflagefläche der Gegenlagerscheibe 14 eine Klebstoffverbindung vorgesehen. Hierzu wird ein geeigneter Klebstoff vor dem eigentlichen Setzvorgang aufgebracht. Ein derartiger Klebstoff füllt insbesondere auch ein für das Einsetzen des Hohlschafts 8 in das Führungsloch 18 erforderliches Spalt- oder Toleranzmaß aus.

Grundsätzlich sind drei unterschiedliche Varianten einer auszugssicheren Verbindung zwischen dem Hohlschaft 8 und der Gegenlagerscheibe 14 vorgesehen. Gemäß der ersten Ausführungsvariante, wie sie aus den FIG 1 und 3 zu entnehmen ist, wird der Befestigungsbereich beim Setzvorgang mit Hilfe einer von unten eingeführten Matrize radial umgebogen und dabei in die Lochwandung der Gegenlagerscheibe 14 eingepresst, so dass eine Art Nietverbund zwischen dem Befestigungselement und der Gegenlagerscheibe 14 ausgebildet ist. Hierzu ist insbesondere auch vorgesehen, dass die stimendseitig umlaufende Ringkante des Hohlschafts 8 scharfkantig ausgebildet ist, sodass sie in die Lochwandung einschneidet. Wie aus den FIG 1 und 2 hervorgeht, steht der als Verformungsbereich ausgebildete Befestigungsbereich 10 in axialer Richtung nicht über die Unterseite der Gegenlagerscheibe 14 über.

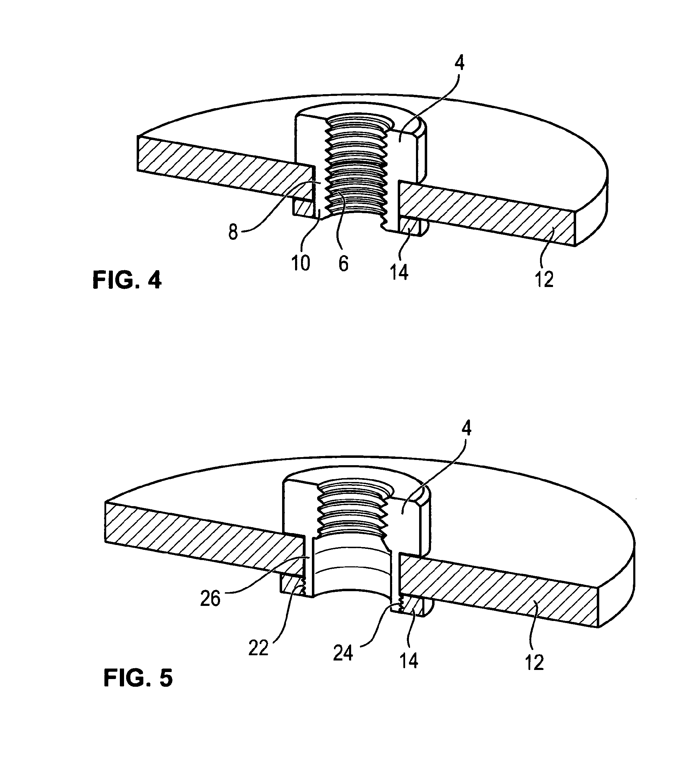

Bei der zweiten Alternative wie sie in den FIG 2 und 4 dargestellt ist, erfolgt kein Umbiegen des Befestigungsbereichs 10. Vielmehr erfolgt lediglich eine Pressverbindung zwischen dem Befestigungsbereich und der Gegenlagerscheibe 14, sodass ein auszugsfester Pressverbund ausgebildet ist.

Bei der dritten Alternative ist schließlich ein Schraubverbund ausgebildet. Hierbei weist der Befestigungsbereich ein Außengewinde 22 auf, dem ein korrespondierendes Innengewinde 24 der Gegenlagerscheibe 14 zugeordnet ist. Hervorzuheben ist, dass das Außengewinde 22 lediglich im Befestigungsbereich 10 ausgebildet ist. In einem Zwischenbereich 26 zwischen dem Kopf 4 und dem Befestigungsbereich 10 weist der Hohlschaft 8 demgegenüber eine glatte, zylindermantelförmige Oberfläche auf.

Um beim Einfügen des Befestigungselements 2 in das erste Bauteil 12 eine Beschädigung der Lochwandung des Führungsloches 18 zu vermeiden, ist der Außendurchmesser des Außengewindes 22 kleiner gleich dem Innendurchmesser d des Führungsloches 18. Das Außengewinde 22 steht daher radial nicht über.

Bei der Ausführungsvariante gemäß der FIG 4 ist ergänzend noch dargestellt, dass das Innengewinde 6 im Bereich des Hohlschaftes 8 weitergeführt und sich insbesondere bis zum Ende des Befestigungselements 2 erstreckt. Im Vergleich zu den anderen Ausführungsvarianten ist hierdurch ein verlängertes Gewinde erreicht, was für eine Reduzierung der Kopfhöhe des Kopfes 4 herangezogen werden kann. Dieses verlängerte Gewinde ist grundsätzlich auch bei den anderen Alternativen einsetzbar.

Bei dem Bauteil 12 handelt es sich vorzugsweise um ein Faserverbund-Bauteil, insbesondere ein sogenanntes CFK-Bauteil, welches sich üblicherweise durch einen laminierten Aufbau auszeichnet. Bei derartigen Leichtbau-Verbundwerkstoffen, insbesondere Faserverbundwerkstoffen, bestehen Probleme bei der Anbringung von mechanischen Befestigungselementen. Insbesondere neigen derartige Baustoffe in Kanten- und Randbereichen zu einer sogenannten Delamination, bei der sich also die einzelnen Schichten voneinander lösen können. Dadurch besteht die Gefahr eines Versagens der Fügeverbindung. Dies ist durch die hier vorgestellt Fügeverbindung vermieden. Von entscheidender Bedeutung ist hierbei, dass beim eigentlichen Setzvorgang keine Kräfte - bis auf die flächige Klemmkraft - auf das erste Bauteil 12 einwirkt. Die Lochwandung des Führungsloches 18 ist während des Setzvorgangs keinen Kräften ausgesetzt. Insgesamt wird dadurch eine zuverlässige und insbesondere auch automatisierte Vorkonfektionierung von Bauteilen aus Faserverbundwerkstoffen mit derartigen Befestigungselementen ermöglicht und ist auch entsprechend vorgesehen. Die Führungslöcher 18 werden hierbei in geeigneter Weise eingebracht, beispielsweise bereits bei der Herstellung des Bauteils durch Freilassungen oder auch durch Bohren oder evtl. auch Stanzen. Auch hier ist jedoch auf eine möglichst schonende Lochoperation zu achten.

Insbesondere die möglichst großflächigen Auflageflächen, nämlich die vorzugsweise identisch ausgebildeten Ringflächen einerseits des Kopfes 4 und andererseits der Gegenlagerscheibe 14, speziell in Kombination mit der Verklebung führt bei den CFK-Bauteilen zu einer zuverlässigen mechanischen Verbindung mit hoher Auszugssicherheit, die den hohen Anforderungen insbesondere auch in der Kraftfahrzeugindustrie insbesondere im Hinblick auf die Crashsicherheit erfüllt.

Generell ist vorgesehen, dass in einem automatisierten Verfahren vorgefertigte Montagebaueinheiten bestehend aus dem ersten Bauteil 12 mit einer Vielzahl an definierten Befestigungspositionen eingebrachten Befestigungselementen 2 hergestellt werden. Diese vorgefertigten Montageeinheiten werden vorzugsweise an einer anderen Produktionswerkstätte, beispielsweise bei einem Zulieferer, vorgefertigt, anschließend an das eigentliche Montageband geliefert, wo die Montage des zweiten Bauteils 20 erfolgt.

### Bezugszeichen

- 2: Befestigungselement
- 4: Kopf
- 6: Gewinde
- 8: Hohlschaft
- 10: Befestigungsbereich
- 12: erstes Bauteil
- 14: Gegenlagerscheibe
- 16: Befestigungsloch
- 18: Führungsloch
- 20: zweites Bauteil
- 22: Außengewinde
- 24: Innengewinde
- 26: Zwischenbereich
- D: Außendurchmesser
- d: Innendurchmesser

## Patentansprüche

1. Fügeverbindung zwischen einem vorgelochten ersten Bauteil (12) und einem Befestigungselement (2), das zur Befestigung eines zweiten Bauteils (20) an der Fügeverbindung ausgebildet ist und insbesondere eine Mutter ist, wobei das Befestigungselement (2) sich in axialer Richtung erstreckt und einen zur Befestigung des zweiten Bauteils (20) ausgebildeten Kopf (4) sowie einen sich daran anschließenden Hohlschaft (8) aufweist,
**dadurch gekennzeichnet, dass**
- das erste Bauteil (12) zwischen dem Befestigungselement (2) und einer Gegenlagerscheibe (14) eingeklemmt ist,
- der Hohlschaft (8) endseitig einen über das erste Bauteil (12) überstehenden Befestigungsbereich (10) aufweist, der in ein Befestigungsloch (16) in der Gegenlagerscheibe (14) eingreift und mit der Gegenlagerscheibe (14) kraft und/oder formschlüssig verbunden ist.

2. Fügeverbindung nach Anspruch 1,
**dadurch gekennzeichnet,**
**dass** der Befestigungsbereich (10) wahlweise
- als ein Verformungsbereich ausgebildet ist, der radial nach Außen umgebogen ist
- mit der Gegenlagerscheibe (14) verpresst ist oder
- mit der Gegenlagerscheibe (14) verschraubt ist.

3. Fügeverbindung nach Anspruch 2,
**dadurch gekennzeichnet,**
**dass** das Befestigungselement (2) und / oder die Gegenlagerscheibe (14) mit dem ersten Bauteil (12) verklebt ist.

4. Fügeverbindung nach einem der vorhergehenden Ansprüche,
**dadurch gekennzeichnet,**
**dass** das Bauteil (12) aus einem Faserverbundwerkstoff besteht.

5. Fügeverbindung nach einem der vorhergehenden Ansprüche,
**dadurch gekennzeichnet,**
**dass** das Befestigungselement (2) als eine Mutter, insbesondere Einpressmutter ausgebildet ist und hierzu im Kopf (4) ein Innengewinde (6) aufweist.

6. Fügeverbindung nach Anspruch 5,
**dadurch gekennzeichnet,**
**dass** das Innengewinde (6) im Hohlschaft (8) vorzugsweise über dessen gesamter axialer Länge fortgeführt ist.

7. Fügeverbindung nach einem der vorhergehenden Ansprüche,
**dadurch gekennzeichnet,**
**dass** der Befestigungsbereich (10) in eine Lochwand des Befestigungslochs (16) eingepresst ist ohne über die Gegenlagerscheibe überzustehen.

8. Fügeverbindung nach einem der Ansprüche 1 bis 6,
**dadurch gekennzeichnet,**
**dass** zur Ausbildung einer Verschraubung mit der Gegenlagerscheibe (14) der Hohlschaft (8) ausschließlich im Befestigungsbereich (10) ein Außengewinde (22) aufweist, und in einem sich an den Kopf (4) anschließenden Zwischenbereich (26) eine glatte Oberfläche aufweist.

9. Fügeverbindung nach Anspruch 8,
**dadurch gekennzeichnet,**
**dass** das Außengewinde (22) in radialer Richtung nicht über den Zwischenbereich (26) übersteht.

10. Fügeverbindung nach einem der vorhergehenden Ansprüche,
**dadurch gekennzeichnet,**
**dass** die Gegenlagerscheibe (14) als ringförmige Lochscheibe ausgebildet ist und einen gleichen Außendurchmesser (D) wie das Befestigungselement (2) aufweist, so dass ringförmige Auflageflächen des Befestigungselements (2) und der Gegenlagerscheibe (14) zumindest weitgehend gleich sind.

11. Fügeverbindung nach einem der vorhergehenden Ansprüche,
**dadurch gekennzeichnet,**
**dass** die Gegenlagerscheibe (14) eine Dicke im Bereich von einigen mm aufweist, insbesondere im Bereich von 1,5 bis 5 mm, und der Außendurchmesser (D) der Gegenlagerscheibe ein Vielfaches größer ist als die Dicke, insbesondere mehr als das fünfache.

12. Fügeverbindung nach einem der vorhergehenden Ansprüche,
**dadurch gekennzeichnet,**
**dass** das zweite Bauteil (20) am ersten Bauteil (12) über das Befestigungselement (2) und einem mit diesem verbundenen Verbindungselement befestigt ist, wobei die Gegenlagerscheibe (14) einen Abstandshalter zwischen den beiden Bauteilen (12, 20) bildet.

13. Befestigungselement (2) und Gegenlagerscheibe (14) für eine Fügeverbindung nach einem der vorhergehenden Ansprüche.

14. Verfahren zur Ausbildung einer Fügeverbindung nach einem der Ansprüche 1 bis 12, bei dem im Rahmen eines Setzvorgangs das Befestigungselement (2) in ein Führungsloch (18) eines vorgelochten ersten Bauteils (12) eingesetzt und mit einer Gegenlagerscheibe (14) kraft- / oder formschlüssig verbunden wird, so dass das erste Bauteil (12) zwischen dem Befestigungselement (2) und der Gegenlagerscheibe (14) eingeklemmt ist, ohne dass bei dem Setzvorgang eine Krafteinwirkung auf die Wandung des Führungslochs (16) erfolgt.

15. Verfahren nach Anspruch 14, bei dem das erste Bauteil (12) ein Verbundbauteil, insbesondere CFK-Bauteil ist, in dem eine Vielzahl von Führungslöchern (16) an definierten Positionen eingebracht sind, und an jedem dieser Führungslöcher (16) ein jeweiliges Befestigungselement (2) mit gegenüberliegender Gegenlagerscheibe (14) befestigt wird, wobei zusätzlich zur Verbindung zwischen der Gegenlagerscheibe (14) und dem Befestigungselement (2) eine Verklebung mit dem ersten Bauteil (12) erfolgt, so dass insgesamt ein vorgefertigtes Montagebauteil mit definierten Befestigungsstellen erhalten ist.
